# EUROPÄISCHE PATENTSCHRIFT

(11) **EP 3 186 848 B1**
(45) Veröffentlichungstag und Bekanntmachung des Hinweises auf die Patenterteilung: **06.03.2019**
(21) Anmeldenummer: 15750671.8
(22) Anmeldetag: 03.08.2015
(51) Int. Cl.: H01M 8/0206, H01M 8/0263, H01M 8/0265

(54) **STRÖMUNGSELEMENT UND BIPOLARPLATTE**
FLOW ELEMENT AND BIPOLAR PLATE
ÉLÉMENT D'ÉCOULEMENT ET PLAQUE BIPOLAIRE

(30) Priorität: 29.08.2014 DE 102014112462
(43) Veröffentlichungstag der Anmeldung: 05.07.2017
(73) Patentinhaber: ElringKlinger AG, 72581 Dettingen (DE)
(72) Erfinder: KRAFT, Juergen, 72555 Metzingen (DE); GOETZ, Michael, 72581 Dettingen (Erms) (DE); MORCOS, Manuel, 72076 Tuebingen (DE)
(74) Vertreter: Hoeger, Stellrecht & Partner Patentanwälte mbB
(86) Internationale Anmeldenummer: PCT/EP2015/067859
(87) Internationale Veröffentlichungsnummer: WO 2016/030150

(56) Entgegenhaltungen:
- WO-A1-97/42672
- DE-A1- 10 253 000
- DE-A1-102004 016 318
- DE-A1-102005 002 924
- DE-B3-102012 109 080
- US-A- 6 048 634
- US-A1- 2003 215 692

## Beschreibung

Die vorliegende Erfindung betrifft ein Strömungselement, welches einen plattenförmigen Grundkörper umfasst, der eine Kanalstruktur aufweist. Mittels eines solchen Strömungselements ist insbesondere eine Fluidströmung über eine vorgegebene Fläche hinweg strömbar und/oder verteilbar.

Insbesondere kann ein solches Strömungselement als Bipolarplatte für eine elektrochemische Vorrichtung verwendet werden. Das Strömungselement dient dabei insbesondere der Zuführung von Brennstoff oder Oxidator und/oder der Abführung von Abgasen.

Strömungselemente, welche eine mäanderförmige oder serpentinenförmige Kanalstruktur aufweisen sind beispielsweise aus der US 5,776,625 A, aus der US 6,099,984 A, aus der US 2003/0215692 A1, aus der US 6,048,634 A, aus der DE 10 2004 016 318 A1, aus der WO 97/42672 A1, aus der DE 102 53 000 A1, aus der DE 10 2005 002924 A1, aus der DE 10 2012 109 080 B3 oder aus der WO 2005/024985 A1 bekannt.

Der vorliegenden Erfindung liegt die Aufgabe zugrunde, ein Strömungselement bereitzustellen, mittels welchem ein Fluid möglichst gleichmäßig über eine Fläche hinweg geführt und/oder verteilt werden kann.

Diese Aufgabe wird erfindungsgemäß durch ein Strömungselement gemäß Anspruch 1 gelöst.

Dadurch, dass erfindungsgemäß mehrere Mäanderabschnitte voneinander verschiedener Kanalzüge vorgesehen sind, welche ineinander geschachtelt angeordnet sind, ist ein Fluid mittels des Strömungselements gleichmäßig über eine Fläche hinwegführbar und/oder verteilbar.

Unter einem Mäanderabschnitt ist in dieser Beschreibung und den beigefügten Ansprüchen insbesondere ein Kanalzugabschnitt zu verstehen, welcher mäanderförmig geführt oder angeordnet ist.

Eine ineinander geschachtelte Anordnung von Mäanderabschnitten ist vorzugsweise zu unterscheiden von aneinander angelegten Mäanderabschnitten. Insbesondere ist bei einer ineinander geschachtelten Anordnung ein gedankliches Trennen der Kanalzüge (Auseinanderschieben der Kanalzüge) höchstens in einer einzigen Richtung möglich, während aneinander angelegte Mäanderabschnitte in mehreren Richtungen berührungslos gedanklich voneinander entfernt werden können.

Ein Mäanderabschnitt umfasst erfindungsgemäß drei oder mehr Kanalzugabschnitte eines Kanalzugs, welche parallel zueinander ausgerichtet, seitlich nebeneinander angeordnet und nacheinander durchströmbar sind.

Diese drei oder mehr Kanalzugabschnitte sind vorzugsweise zumindest näherungsweise linear ausgebildet.

Unter einer Anordnung "seitlich nebeneinander" ist vorzugsweise eine Anordnung derart zu verstehen, dass die Kanalzugabschnitte in einer Richtung, welche senkrecht zur Strömungsrichtung eines Fluids in den Kanalzugabschnitten ausgerichtet ist, benachbart zueinander angeordnet sind.

Ein Mäanderabschnitt umfasst ferner zwei oder mehr Strömungsumlenkabschnitte eines Kanalzugs.

Es kann vorgesehen sein, dass mittels eines oder mehrerer Kanalzüge eine oder mehrere Einbuchtungen gebildet sind, in welche sich ein oder mehrere Mäanderabschnitte eines weiteren Kanalzugs hineinerstrecken.

Ferner kann vorgesehen sein, dass mittels eines oder mehrerer Kanalzüge eine oder mehrere Einbuchtungen gebildet sind, in welche sich mehrere Mäanderabschnitte mehrerer weiterer Kanalzüge hineinerstrecken.

Günstig kann es sein, wenn die Kanalzüge sich zumindest näherungsweise ausschließlich längs und/oder entgegen zweier senkrecht zueinander ausgerichteter Basisrichtungen des Strömungselements erstrecken.

Ein oder mehrere Mäanderabschnitte eines oder mehrerer Kanalzüge sind bezüglich der Basisrichtungen vorzugsweise mindestens dreiseitig von einem oder mehreren weiteren Kanalzügen umgeben.

Es kann vorgesehen sein, dass mittels eines oder mehrerer Kanalzüge eine oder mehrere Einbuchtungen gebildet sind, welche einen oder mehrere Mäanderabschnitte eines oder mehrerer weiterer Kanalzüge umgeben. Insbesondere können drei Einbuchtungsränder vorgesehen sein, welche einen oder mehrere Mäanderabschnitte eines oder mehrerer weiterer Kanalzüge begrenzen.

Vorteilhaft kann es sein, wenn die Kanalstruktur durch Erhöhungen und/oder Vertiefungen des plattenförmigen Grundkörpers gebildet ist.

Insbesondere kann vorgesehen sein, dass in dem plattenförmigen Grundkörper Kanäle und Stege gebildet sind, welche die Kanalstruktur bilden.

Bei einer Ausgestaltung der Erfindung kann vorgesehen sein, dass der plattenförmige Grundkörper zumindest im Bereich der Kanalstruktur zumindest näherungsweise eine konstante Materialstärke aufweist.

Beispielsweise kann vorgesehen sein, dass die Kanalstruktur durch Formgebung oder Umformung eines zunächst ebenen plattenförmigen Elements gebildet ist. Eine Materialstärke des Grundkörpers ist hierdurch insbesondere im Wesentlichen konstant. Beispielsweise ist eine Materialstärkenvariation, insbesondere Reduktion, von höchstens ungefähr 50 % vorgesehen.

Insbesondere kann vorgesehen sein, dass der plattenförmige Grundkörper ein Blechumformprodukt ist.

Es kann vorgesehen sein, dass das Strömungselement einen oder mehrere Überströmungsbereiche umfasst, an welchem Fluid aus einem Kanalzug austritt und in einen weiteren Kanalzug einströmt, das heißt insbesondere einen Stegbereich zwischen zwei Kanalzügen überströmt.

Alternativ oder ergänzend hierzu kann vorgesehen sein, dass das Strömungselement einen oder mehrere Überströmungsbereiche umfasst, an welchen Fluid aus einem Kanalzugabschnitt austritt und in einen weiteren Kanalzugabschnitt desselben Kanalzugs einströmt.

Entscheidend für das Überströmen eines Stegbereichs zwischen zwei Kanälen, insbesondere Kanalzugabschnitten, ist insbesondere ein Druckunterschied und/oder ein Lauflängenunterschied des Fluids zwischen zwei benachbart angeordneten Kanalzugabschnitten.

Insbesondere ergibt sich ein Überströmen eines Stegbereichs zwischen zwei Kanalzugabschnitten dann, wenn die Kanalzugabschnitte längs eines Durchströmungswegs des in einem Kanalzug geführten Fluids unterschiedlich weit von einem Einlass und/oder Auslass des jeweiligen Kanalzugs entfernt sind.

Bei einem Überströmen eines Stegbereichs wird vorzugsweise eine an das Strömungselement angrenzende Gasdiffusionsschicht (Gas Diffusion Layer, GDL) mit dem Fluid durchströmt. Durch ein Überströmen eines Stegbereichs zwischen zwei Kanalzügen oder Kanalzugabschnitten ergibt sich somit vorzugsweise eine vorteilhafte Fluidverteilung in einer an das Strömungselement angrenzenden Schicht oder Lage einer elektrochemischen Vorrichtung.

Vorteilhaft kann es sein, wenn zur gezielten Einstellung einer Überströmung zwischen zwei Kanalzügen oder zwei Kanalzugabschnitten eine Stegbreite zwischen den Kanalzügen bzw. Kanalzugabschnitten variiert, angepasst oder eingestellt wird.

Beispielsweise kann ein gezielter Überströmungsbereich dadurch hergestellt werden, dass ein Stegbereich zwischen zwei Kanalzugabschnitten lokal verschmälert ausgebildet ist. Alternativ oder ergänzend hierzu kann ein gezielter Überströmungsbereich dadurch hergestellt werden, dass eine lokale Vergrößerung und/oder Verkleinerung einer Kanalquerschnittsfläche vorgesehen wird.

Vorteilhaft kann es sein, wenn mindestens ein Mäanderabschnitt einen oder mehrere Überströmungsbereiche aufweist, in welchen ein in dem Mäanderabschnitt geführtes Fluid aus dem Kanalzug oder Kanalzugabschnitt ausströmen und in einen weiteren Kanalzug oder Kanalzugabschnitt einströmen kann.

Das erfindungsgemäße Strömungselement eignet sich insbesondere zur Verwendung in einer Bipolarplatte, insbesondere einer Bipolarplatte für eine elektrochemische Vorrichtung.

Eine elektrochemische Vorrichtung ist insbesondere eine elektrochemische Brennstoffzellenvorrichtung, beispielsweise eine Polymerelektrolytmembran-(PEM)-Brennstoffzellenvorrichtung.

Günstig kann es sein, wenn die Bipolarplatte ein oder mehrere Strömungselemente, insbesondere erfindungsgemäße Strömungselemente, umfasst.

Es kann jedoch auch vorgesehen sein, dass die Bipolarplatte aus einem oder mehreren erfindungsgemäßen Strömungselementen gebildet ist.

Bei einer Ausgestaltung der Erfindung kann vorgesehen sein, dass die Bipolarplatte zwei miteinander verbundene Strömungselemente umfasst, welche voneinander verschieden ausgebildete Kanalstrukturen aufweisen.

Ferner können das erfindungsgemäße Strömungselement und/oder die erfindungsgemäße Bipolarplatte einzelne oder mehrere der nachfolgend beschriebenen Merkmale und/oder Vorteile aufweisen:
Günstig kann es sein, wenn ein Mäanderabschnitt eines Kanalzugs eine mäanderförmige Unterstruktur eines Kanalzugs bildet.

Die Kanalstruktur des Strömungselements bildet insbesondere ein so genanntes Flowfield.

Mittels einer erfindungsgemäßen Bipolarplatte ist insbesondere ein Reaktionsgas und/oder Kühlmittel gleichmäßig über eine Fläche einer Brennstoffzelle verteilbar. In Kanälen (Kanalzüge) des Strömungselements wird vorzugsweise ein Medium geführt. Zwischen den Kanälen angeordnete Stege des Strömungselements bilden vorzugsweise eine mechanische Abstützung, insbesondere zur Abstützung von gestapelten und/oder verpressten Komponenten.

Vorteilhaft kann es sein, wenn eine Brennstoffzellenvorrichtung eine Kombination aus einer anodenseitigen Bipolarplatte, einer kathodenseitigen Bipolarplatte und einer Membranelektrodeneinheit umfasst, welche zwischen Stegen (Erhöhungen) der anodenseitigen Bipolarplatte und Stegen (Erhöhungen) der kathodenseitigen Bipolarplatte verpresst ist.

Durch die Verwendung von Mäanderabschnitten kann vorzugsweise eine Länge eines oder mehrerer Kanalzüge erhöht werden. Zudem können die Flächen mit einer geringeren Anzahl an Kanalzügen überdeckt werden. Durch Verlängerung der Kanalzüge kann vorzugsweise ein höherer Druckverlust realisiert werden, wodurch sich eine gleichmäßigere Verteilung der Durchströmung auf die unterschiedlichen Kanalzüge ergibt. Beispielsweise kann hierdurch ermöglicht werden, dass sich das Verhältnis des Druckverlusts über verschiedene Kanalzüge hinweg weniger verschiebt, wenn lokal und temporär Wassertröpfchen auftreten.

Es kann vorgesehen sein, eine Strömungscharakteristik einer Kanalstruktur durch Variation einer Kanalbreite, Kanalform, Stegbreite und/oder Stegform gezielt zu beeinflussen.

Vorzugsweise umfasst ein Kanalzug mehrere Mäanderabschnitte, welche bezüglich einer Hauptströmungsrichtung hintereinander angeordnet sind. Die Orientierung der Mäanderabschnitte ist vorzugsweise so gewählt, dass eine Einlassseite eines Mäanders an eine Auslassseite eines weiteren Mäanders angrenzt. Insbesondere kann hierdurch die Lauflänge (Weg längs des Kanalzugs ausgehend von einer Eintrittseite) eingestellt werden. Vorteilhaft kann es sein, wenn Kanalstrukturen mit unterschiedlich breiten Mäanderabschnitten, unterschiedlicher Anzahl an Wiederholeinheiten und/oder verschiedener Verschachtelung auf einer Kathodenseite einerseits und einer Anodenseite andererseits an einer Bipolarplatte vorgesehen sind.

Vorteilhaft kann es sein, wenn ein Strömungselement Mäanderabschnitte mit unterschiedlich lang ausgebildeten geradlinigen Kanalzugabschnitten umfasst. Hierdurch kann vorzugsweise eine Überströmung zwischen verschiedenen Kanalzugabschnitten, Mäanderabschnitten und/oder verschiedenen Kanalzügen gezielt eingestellt werden.

Vorteilhaft kann es sein, wenn ein Strömungselement auf einer ersten Seite einer Membranelektrodeneinheit eine mäanderförmige Kanalstruktur aufweist, während ein Strömungselement auf einer dieser Seite gegenüberliegenden weiteren Seite beispielsweise eine ausschließlich geradlinige Kanalstruktur aufweist.

Insbesondere zur gezielten Einstellung einer Überströmung über die Stege (Erhöhungen) kann vorgesehen sein, dass innerhalb eines Mäanderabschnitts eine lokale Stegbreitenanpassung vorgenommen wird.

Vorteilhaft kann es sein, wenn mäanderförmige Kanalstrukturen unterschiedlicher Länge, Breite und/oder Vielfachheit auf einer Anodenseite einerseits und einer Kathodenseite andererseits eingesetzt werden. Hierdurch können sich Kanalzugabschnitte aus voneinander verschiedenen Mäanderabschnitten überlappen. Dies kann dafür genutzt werden, die Wasserverteilung und/oder Temperaturverteilung über eine Zelle hinweg zu homogenisieren, da somit die Medien in verschiedenen Kanalzugabschnitten miteinander wechselwirken.

Günstig kann es sein, wenn die Kanalstrukturen zweier Strömungselemente, welche insbesondere eine Bipolarplatte bilden, eine identische Periodizität und/oder Vielfachheit aufweisen. Vorzugsweise sind die Stegbreiten und/oder Stegabstände der beiden Strömungselemente im Wesentlichen konstant, so dass die Strömungselemente in einem aneinander angelegten Zustand mit den jeweiligen Stegbereichen aneinander angrenzen.

Ineinander geschachtelt angeordnete Mäanderabschnitte können insbesondere ineinander verschränkt angeordnete Mäanderabschnitte sein.

Mittels ineinander geschachtelt angeordneten oder ineinander verschränkt angeordneten Mäanderabschnitten kann vorzugsweise eine Länge eines Kanalzugs reduziert werden. Beispielsweise kann eine kürzeste Kanalzuglänge in einem einzeln als Mäander geführten Kanalzug (unter Vernachlässigung einer Flowfieldbreite) ungefähr die dreifache Länge der Kanalstruktur in Strömungsrichtung sein. Durch die Verwendung von ineinander geschachtelt angeordneten Mäanderstrukturen kann sich die Kanalzuglänge ohne Einschränkung der Mäandercharakteristik beispielsweise auf ungefähr die doppelte Länge der Kanalstruktur in Strömungsrichtung oder ungefähr fünf Drittel der Länge der Kanalstruktur in Strömungsrichtung reduzieren.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung einer ersten Ausführungsform eines Strömungselements, welches eine Kanalstruktur mit ineinander geschachtelt angeordneten Mäanderabschnitten aufweist;
- Fig. 2: eine vergrößerte Darstellung des Bereichs II in Fig. 1; und
- Fig. 3: eine der Fig. 1 entsprechende schematische Darstellung einer alternativen Ausführungsform eines Strömungselements.

Gleiche oder funktional äquivalente Elemente sind in sämtlichen Figuren mit denselben Bezugszeichen versehen.

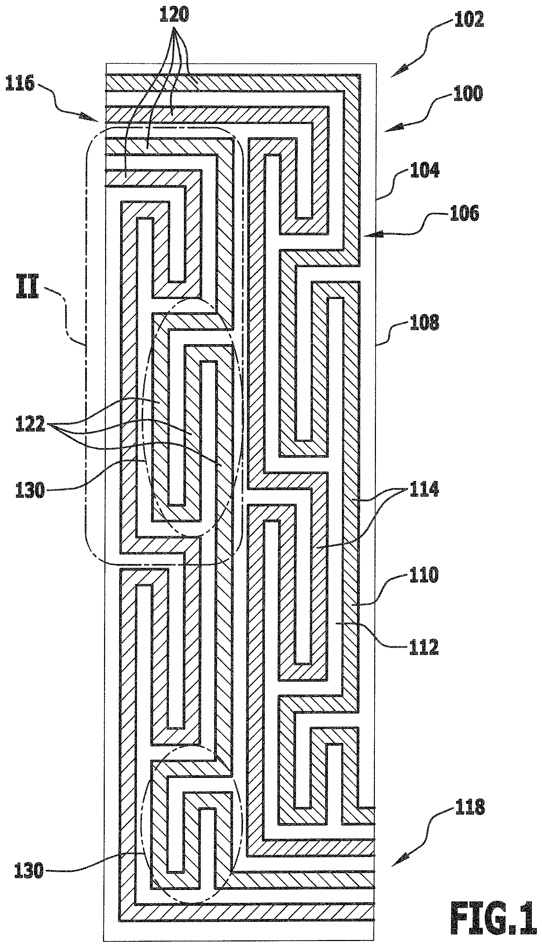

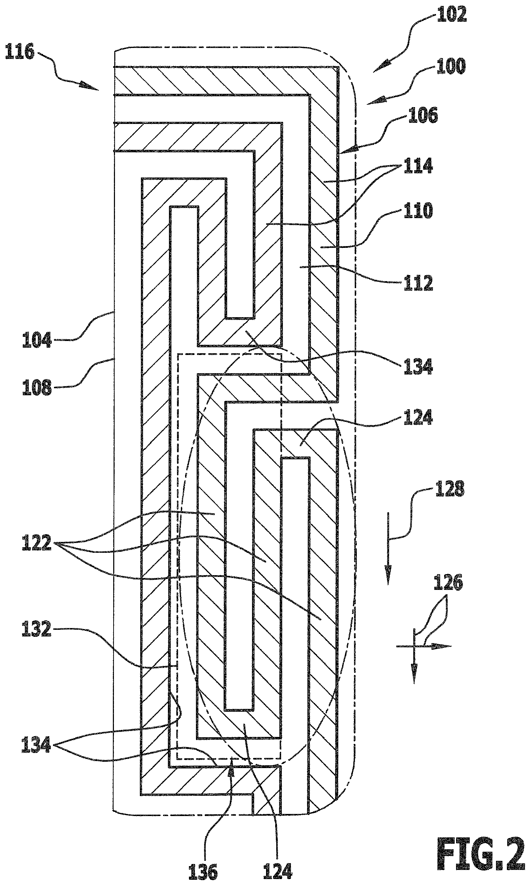

Eine in den Fig. 1 und 2 dargestellte erste Ausführungsform eines als Ganzes mit 100 bezeichneten Strömungselements ist beispielsweise Bestandteil einer Bipolarplatte 102 einer elektrochemischen Vorrichtung, insbesondere einer Brennstoffzellenvorrichtung.

Das Strömungselement 100 umfasst einen plattenförmigen Grundkörper 104, welcher eine Kanalstruktur 106 aufweist.

Der Grundkörper 104 ist beispielsweise ein Blechumformprodukt 108 und als solches durch Umformen eines zunächst ebenen plattenförmigen Elements hergestellt oder herstellbar.

Der Grundkörper 104 umfasst insbesondere mehrere Vertiefungen 110 und Erhöhungen 112.

Die Vertiefungen 110 bilden insbesondere Kanäle 114 der Kanalstruktur 106.

Ein Kanal 114 der Kanalstruktur 106, welcher sich durchgehend von einer Eintrittseite 116 des Strömungselements 100 bis zu einer Austrittseite 118 des Strömungselements 100 erstreckt, wird als Kanalzug 120 bezeichnet.

Bei der in den Fig. 1 und 2 dargestellten ersten Ausführungsform eines Strömungselements 100 sind beispielsweise vier Kanalzüge 120 vorgesehen.

Die Kanalzüge 120 umfassen jeweils mehrere Kanalzugabschnitte 122, insbesondere geradlinige oder gerade oder lineare Kanalzugabschnitte 122.

Ferner umfassen die Kanalzüge 120 jeweils mehrere Strömungsumlenkabschnitte 124.

In den Kanalzugabschnitten 122 wird ein in dem jeweiligen Kanalzug 120 geführtes Fluid insbesondere längs oder entgegen einer Basisrichtung 126 des Strömungselements 100 geführt.

Das Strömungselement 100 weist beispielsweise zwei Basisrichtungen 126 auf, welche senkrecht zueinander ausgerichtet sind und längs und entgegen welcher das Fluid in den Kanälen 114 führbar ist.

Eine als Strömungsrichtung 128 bezeichnete Hauptströmungsrichtung des Fluids ergibt sich zumindest näherungsweise durch eine Haupterstreckungsrichtung des Kanalzugs 120 oder durch die Ausrichtung der geradlinigen Kanalzugabschnitte 122 (siehe Fig. 2).

Insbesondere ist die Strömungsrichtung 128 diejenige Richtung, längs oder entgegen welcher sich ein Großteil der geradlinigen Kanalzugabschnitte 122 erstreckt.

Mittels der Strömungsumlenkabschnitte 124 ist beispielsweise die Strömungsrichtung 128 in einem Kanalzug 120 umkehrbar, so dass beispielsweise zunächst längs der Strömungsrichtung 128 in einem geradlinigen Kanalzugabschnitt 122 geführtes Fluid um 180° umgelenkt und entgegen der Strömungsrichtung 128 in einem seitlich benachbart angeordneten weiteren Kanalzugabschnitt 122 geführt wird. Es kann jedoch auch eine zweifache Strömungsumlenkung um 90° vorgesehen sein.

Mittels zweier oder mehrerer seitlich bezüglich der Strömungsrichtung 128 benachbart angeordneter Kanalzugabschnitte 122 und mittels zweier oder mehrerer Strömungsumlenkabschnitte 124 sind ein oder mehrere Mäanderabschnitte 130 eines Kanalzugs 120 gebildet.

Bei der in den Fig. 1 und 2 dargestellten ersten Ausführungsform eines Strömungselements 100 sind beispielhaft jeweils zwei Mäanderabschnitte 130 pro Kanalzug 120 vorgesehen.

Die Mäanderabschnitte 130 können dabei voneinander verschiedene Dimensionen, insbesondere Längen, aufweisen, wodurch eine gezielte Strömungsanpassung in dem Strömungselement 100 ermöglicht werden kann.

Wie insbesondere Fig. 1 zu entnehmen ist, sind die Mäanderabschnitte 130 der Kanalzüge 120 so angeordnet, dass zwischen zwei Mäanderabschnitten 130 eines Kanalzugs 120 ein Mäanderabschnitt 130 eines benachbart angeordneten Kanalzugs 120 eingeschoben ist.

Die Mäanderabschnitte 130 von benachbart zueinander angeordneten Kanalzügen 120 sind somit ineinander geschachtelt angeordnet.

Ein Kanalzug 120 umfasst insbesondere mindestens eine Einbuchtung 132, in welche sich ein Mäanderabschnitt 130 eines benachbart angeordneten Kanalzugs 120 hineinerstreckt.

Der die Einbuchtung 132 bildende Kanalzug 120 bildet dabei insbesondere drei Einbuchtungsränder 134, welche den sich in die Einbuchtung 132 hineinerstreckenden Mäanderabschnitt 130 bezüglich der Basisrichtungen 126 dreiseitig umgeben.

Die ineinander geschachtelte Anordnung der Mäanderabschnitte 130 voneinander verschiedener Kanalzüge 120 kann den Vorteil bieten, dass eine Überströmung von Stegen, bei welcher Fluid aus einem Abschnitt eines Kanalzugs 120 in einen anderen Abschnitt des gleichen oder eines anderen Kanalzugs 120 übertritt, zur Optimierung der Strömung innerhalb des Strömungselements 100 genutzt wird.

Das Strömungselement 100 umfasst hierzu vorzugsweise einen oder mehrere Überströmungsbereiche 136, welche insbesondere zwischen zwei Kanalzugabschnitten 122 gebildet sind.

Ein Überströmungsbereich 136 ist insbesondere ein Bereich, welcher durch eine Erhöhung 112, insbesondere einen Steg, gebildet ist und folglich eine Durchströmung mit Fluid behindern oder verhindern sollte.

Insbesondere durch Druckunterschiede und/oder Lauflängenunterschiede des Fluids in benachbart zueinander verlaufenden Kanalzugabschnitten 122 ergibt sich eine Überströmung in den Überströmungsbereichen 136. Diese Überströmung führt insbesondere zu einem Durchströmen einer (nicht dargestellten) angrenzenden Gasdiffusionsschicht (Gas Diffusion Layer, GDL).

Wie insbesondere Fig. 2 zu entnehmen ist, ermöglicht ein Überströmungsbereich 136 insbesondere einen Übertritt von Fluid aus einem Mäanderabschnitt 130 eines Kanalzugs 120 in einen weiteren separaten Kanalzug 120.

Hierdurch kann eine optimierte Fluidverteilung innerhalb des Strömungselements 100 ermöglicht werden.

Bei der in den Fig. 1 und 2 dargestellten ersten Ausführungsform des Strömungselements 100 sind jeweils zwei Kanalzüge 120 so ausgebildet und angeordnet, dass deren Mäanderabschnitte 130 ineinander verschachtelt angeordnet sind.

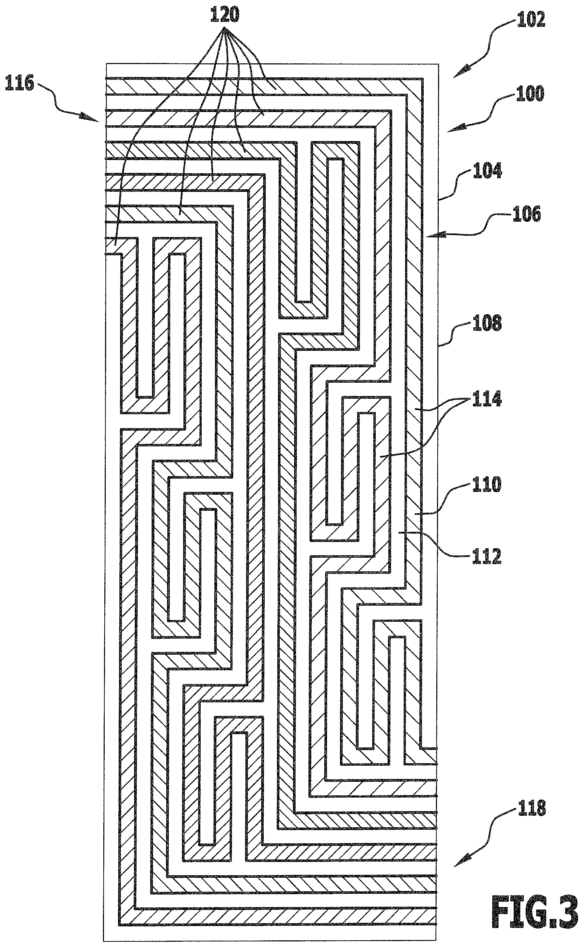

Eine in Fig. 3 dargestellte zweite Ausführungsform eines Strömungselements 100 unterscheidet sich von der in den Fig. 1 und 2 dargestellten ersten Ausführungsform im Wesentlichen dadurch, dass jeweils drei Kanalzüge 120 so ausgebildet und angeordnet sind, dass deren Mäanderabschnitte 130 ineinander verschachtelt angeordnet sind.

Zudem sind bei der in Fig. 3 dargestellten Ausführungsform eines Strömungselements 100 insgesamt sechs Kanalzüge 120 vorgesehen, nämlich zweimal je drei Kanalzüge 120 mit ineinander geschachtelt angeordneten Mäanderabschnitten 130.

Dabei sind fünf seitlich benachbarte Kanalzugabschnitte 122 von drei Kanalzügen 120 abgedeckt. Die Länge eines einzelnen Kanalzugs 120 beträgt somit ungefähr 5/3 einer Gesamtlänge der Kanalstruktur 106.

Im Übrigen stimmt die in Fig. 3 dargestellte zweite Ausführungsform eines Strömungselements 100 hinsichtlich Aufbau und Funktion mit der in den Fig. 1 und 2 dargestellten ersten Ausführungsform überein, so dass auf deren vorstehende Beschreibung insoweit Bezug genommen wird.

## Patentansprüche

1. Strömungselement (100), umfassend einen plattenförmigen Grundkörper (104), welcher eine Kanalstruktur (106) aufweist,
wobei die Kanalstruktur (106) zwei oder mehr Kanalzüge (120) umfasst, welche eine Eintrittseite (116) der Kanalstruktur (106) mit einer Austrittseite (118) der Kanalstruktur (106) verbinden,
wobei die zwei oder mehr Kanalzüge (120) jeweils einen oder mehrere Mäanderabschnitte (130) aufweisen,
wobei Mäanderabschnitte (130) voneinander verschiedener Kanalzüge (120) ineinander geschachtelt angeordnet sind, dadurch charakterisiert, dass die Mäanderabschnitte (130) der Kanalzüge (120) so angeordnet sind, dass zwischen zwei Mäanderabschnitten (130) eines Kanalzugs (120) ein Mäanderabschnitt (130) eines benachbart angeordneten Kanalzugs (120) eingeschoben ist,
wobei ein Mäanderabschnitt (130) drei oder mehr Kanalzugabschnitte (122) eines Kanalzugs (120) umfasst, welche parallel zueinander ausgerichtet, seitlich nebeneinander angeordnet und nacheinander durchströmbar sind, und
wobei ein Mäanderabschnitt (130) zwei oder mehr Strömungsumlenkabschnitte (124) eines Kanalzugs (120) umfasst.

2. Strömungselement (100) nach Anspruch 1, **dadurch gekennzeichnet, dass** mittels eines oder mehrerer Kanalzüge (120) eine oder mehrere Einbuchtungen (132) gebildet sind, in welche sich ein oder mehrere Mäanderabschnitte (130) eines weiteren Kanalzugs (120) hineinerstrecken.

3. Strömungselement (100) nach einem der Ansprüche 1 oder 2, **dadurch gekennzeichnet, dass** mittels eines oder mehrerer Kanalzüge (120) eine oder mehrere Einbuchtungen (132) gebildet sind, in welche sich mehrere Mäanderabschnitte (130) mehrerer weiterer Kanalzüge (120) hineinerstrecken.

4. Strömungselement (100) nach einem der Ansprüche 1 bis 3, **dadurch gekennzeichnet, dass** die Kanalzüge (120) sich ausschließlich längs und/oder entgegen zweier senkrecht zueinander ausgerichteter Basisrichtungen (126) des Strömungselements (100) erstrecken.

5. Strömungselement (100) nach Anspruch 4, **dadurch gekennzeichnet, dass** ein oder mehrere Mäanderabschnitte (130) eines oder mehrerer Kanalzüge (120) bezüglich der Basisrichtungen (126) mindestens dreiseitig von einem oder mehreren weiteren Kanalzügen (120) umgeben sind.

6. Strömungselement (100) nach einem der Ansprüche 1 bis 5, **dadurch gekennzeichnet, dass** die Kanalstruktur (106) durch Erhöhungen (112) und/oder Vertiefungen (110) des plattenförmigen Grundkörpers (104) gebildet ist.

7. Strömungselement (100) nach einem der Ansprüche 1 bis 6, **dadurch gekennzeichnet, dass** der plattenförmige Grundkörper (104) zumindest im Bereich der Kanalstruktur (106) eine konstante Materialstärke aufweist.

8. Strömungselement (100) nach einem der Ansprüche 1 bis 7, **dadurch gekennzeichnet, dass** der plattenförmige Grundkörper (104) ein Blechumformprodukt (108) ist.

9. Strömungselement (100) nach einem der Ansprüche 1 bis 8, **dadurch gekennzeichnet, dass** das Strömungselement (100) einen oder mehrere Überströmungsbereiche (136) aufweist, in welchen ein in einem Kanalzugabschnitt (122) eines Kanalzugs (120) geführtes Fluid aus dem Kanalzugabschnitt (122) ausströmt und in einen weiteren Kanalzugabschnitt (122) desselben Kanalzugs (120) oder eines weiteren Kanalzugs (120) überströmt.

10. Strömungselement (100) nach einem der Ansprüche 1 bis 9, **dadurch gekennzeichnet, dass** Kanalzugabschnitte (122) der Kanalzüge (120) und/oder die Kanalzüge (120) selbst durch Stege voneinander getrennt sind, wobei die Stege zwischen einem oder mehreren geraden Kanalzugabschnitten (122) lokal variierende Stegbreiten aufweisen.

11. Bipolarplatte (102) für eine elektrochemische Vorrichtung, umfassend ein oder mehrere Strömungselemente (100) nach einem der Ansprüche 1 bis 10.

12. Bipolarplatte (102) nach Anspruch 11, **dadurch gekennzeichnet, dass** die Bipolarplatte (102) zwei miteinander verbundene Strömungselemente (100) umfasst, welche voneinander verschieden ausgebildete Kanalstrukturen (106) aufweisen.

## Claims

1. Flow element (100), comprising a plate-like main body (104), which has a channel structure (106),
wherein the channel structure (106) comprises two or more channel paths (120), which connect an inlet side (116) of the channel structure (106) to an outlet side (118) of the channel structure (106),
wherein the two or more channel paths (120) each have one or more meandering segments (130),
wherein meandering segments (130) of channel paths (120) different from each other are nested in each other,
**characterized in that** the meandering segments (130) of the channel paths (120) are arranged such that inserted between two meandering segments (130) of a channel path (120) is a meandering segment (130) of an adjacently arranged channel path (120),
wherein a meandering segment (130) comprises three or more channel path segments (122) of a channel path (120), which are oriented parallel to one another, are arranged side by side, and are configured to be passed through in succession by a fluid flow, and
wherein a meandering segment (130) comprises two or more flow deflection segments (124) of a channel path (120).

2. Flow element (100) in accordance with Claim 1, **characterized in that** one or more indentations (132) is/are formed by means of one or more channel paths (120), and one or more meandering segments (130) of a further channel path (120) extend into said indentation(s).

3. Flow element (100) in accordance with either one of Claims 1 or 2,
**characterized in that** one or more indentations (132) is/are formed by means of one or more channel paths (120), and a plurality of meandering segments (130) of a plurality of further channel paths (120) extend into said indentation(s).

4. Flow element (100) in accordance with any one of Claims 1 to 3, **characterized in that** the channel paths (120) extend exclusively along and/or opposite to two basic directions (126) of the flow element (100) oriented perpendicularly to each other.

5. Flow element (100) in accordance with Claim 4, **characterized in that**, in relation to the basic directions (126), one or more meandering segments (130) of one or more channel paths (120) is/are surrounded at least on three sides by one or more further channel paths (120).

6. Flow element (100) in accordance with any one of Claims 1 to 5, **characterized in that** the channel structure (106) is formed by raised portions (112) and/or recesses (110) of the plate-like main body (104).

7. Flow element (100) in accordance with any one of Claims 1 to 6, **characterized in that** the plate-like main body (104), at least in the region of the channel structure (106), has a constant material thickness.

8. Flow element (100) in accordance with any one of Claims 1 to 7, **characterized in that** the plate-like main body (104) is a shaped sheet metal product (108).

9. Flow element (100) in accordance with any one of Claims 1 to 8, **characterized in that** the flow element (100) has one or more flow transfer regions (136), in which a fluid guided in a channel path segment (122) of a channel path (120) flows out from the channel path segment (122) and flows over into a further channel path segment (122) of the same channel path (120) or of a further channel path (120).

10. Flow element (100) in accordance with any one of Claims 1 to 9, **characterized in that** channel path segments (122) of the channel paths (120) and/or the channel paths (120) themselves are separated from one another by ribs, wherein the ribs have locally varying rib widths between one or more straight channel path segments (122).

11. Bipolar plate (102) for an electrochemical device, comprising one or more flow elements (100) in accordance with any one of Claims 1 to 10.

12. Bipolar plate (102) in accordance with Claim 11, **characterized in that** the bipolar plate (102) comprises two flow elements (100) connected to each other, which have channel structures (106) formed differently from each other.

## Revendications

1. Elément d'écoulement (100), comprenant un corps de base (104) en forme de plaque, lequel présente une structure de canal (106),
dans lequel la structure de canal (106) comprend deux segments de canal (120) ou plus, lesquels relient un côté d'entrée (116) de la structure de canal (106) à un côté de sortie (118) de la structure de canal (106),
dans lequel les deux segments de canal (120) ou plus présentent respectivement une ou plusieurs sections sinueuses (130),
dans lequel des sections sinueuses (130) de segments de canal (120) différents les uns des autres sont disposées de manière imbriquée les unes dans les autres,
**caractérisé en ce que**
les sections sinueuses (130) des segments de canal (120) sont disposées de telle sorte qu'une section sinueuse (130) d'un segment de canal (120) disposé de manière adjacente est introduite par coulissement entre deux sections sinueuses (130) d'un segment de canal (120),
dans lequel une section sinueuse (130) comprend trois sections de segment de canal (122) ou plus d'un segment de canal (120), lesquelles sont orientées de manière parallèle les unes par rapport aux autres, sont disposées côté à côté latéralement et peuvent être traversées par un flux les unes après les autres, et
dans lequel une section sinueuse (130) comprend deux sections de renvoi d'écoulement (124) ou plus d'un segment de canal (120).

2. Elément d'écoulement (100) selon la revendication 1, **caractérisé en ce qu'**une ou plusieurs indentations (132) sont formées au moyen d'un ou de plusieurs segments de canal (120), à l'intérieur desquelles s'étendent une ou plusieurs sections sinueuses (130) d'un autre segment de canal (120).

3. Elément d'écoulement (100) selon l'une quelconque des revendications 1 ou 2, **caractérisé en ce qu'**une ou plusieurs indentations (132) sont formées au moyen d'un ou de plusieurs segments de canal (120), à l'intérieur desquelles s'étendent plusieurs sections sinueuses (130) de plusieurs autres segments de canal (120).

4. Elément d'écoulement (100) selon l'une quelconque des revendications 1 à 3, **caractérisé en ce que** les segments de canal (120) s'étendent exclusivement le long de et/ou dans le sens opposé à deux directions de base (126), orientées de manière perpendiculaire l'une à l'autre, de l'élément d'écoulement (100).

5. Elément d'écoulement (100) selon la revendication 4, **caractérisé en ce qu'**une ou plusieurs sections sinueuses (130) d'un ou de plusieurs segments de canal (120) sont entourées par rapport aux directions de base (126) au moins sur trois côtés par un ou plusieurs autres segments de canal (120).

6. Elément d'écoulement (100) selon l'une quelconque des revendications 1 à 5, **caractérisé en ce que** la structure de canal (106) est formée par des parties surélevées (112) et/ou des renfoncements (110) du corps de base (104) en forme de plaque.

7. Elément d'écoulement (100) selon l'une quelconque des revendications 1 à 6, **caractérisé en ce que** le corps de base (104) en forme de plaque présente au moins dans la zone de la structure de canal (106) une épaisseur de matériau constante.

8. Elément d'écoulement (100) selon l'une quelconque des revendications 1 à 7, **caractérisé en ce que** le corps de base (104) en forme de plaque est un produit de façonnage de tôle (108).

9. Elément d'écoulement (100) selon l'une quelconque des revendications 1 à 8, **caractérisé en ce que** l'élément d'écoulement (100) présente une ou plusieurs zones de passage de flux (136), dans lesquelles un fluide guidé dans une section de segment de canal (122) d'un segment de canal (120) provient de la section de segment de canal (122) et passe dans une autre section de segment de canal (122) du même segment de canal (120) ou d'un autre segment de canal (120).

10. Elément d'écoulement (100) selon l'une quelconque des revendications 1 à 9, **caractérisé en ce que** des sections de segment de canal (122) des segments de canal (120) et/ou les segments de canal (120) eux-mêmes sont séparés les uns des autres par des entretoises, dans lequel les entretoises présentent entre une ou plusieurs sections de segment de canal (122) rectilignes des largeurs d'entretoise variables localement.

11. Plaque bipolaire (102) pour un dispositif électrochimique, comprenant un ou plusieurs éléments d'écoulement (100) selon l'une quelconque des revendications 1 à 10.

12. Plaque bipolaire (102) selon la revendication 11, **caractérisée en ce que** la plaque bipolaire (102) comprend deux éléments d'écoulement (100) reliés l'un à l'autre, lesquels présentent des structures de canal (106) différentes les unes des autres.
